# EUROPEAN PATENT SPECIFICATION

(11) **EP 1 841 830 B1**
(45) Date of publication and mention of the grant of the patent: **17.06.2015**
(21) Application number: 06700132.1
(22) Date of filing: 11.01.2006
(51) Int. Cl.: C09J 7/02

(54) **ADHESIVE SHEET HAVING MULTI-STAGED AIR VENT CHANNELS**
KLEBEFOLIE MIT MEHRSTUFIGEN LÜFTUNGSKANÄLEN
FEUILLE ADHESIVE POURVUE DE CANAUX D'EVACUATION D'AIR SUR PLUSIEURS NIVEAUX

(30) Priority: 28.01.2005 KR 20050007921; 15.11.2005 KR 20050109139
(43) Date of publication of application: 10.10.2007
(73) Proprietor: LG Chem, Ltd., Youngdungpo-gu, Seoul 150-721 (KR)
(72) Inventor: LIM, Dong-hoon, 111-501 Haanjugongbone1-dangi, Gwangmyeong-si, Gyeonggi-do, 423-750 (KR); NAM, Youn-woo, 3-402, Samsung APT, Cheongju-si, Chungcheongbuk-do, 361-796 (KR); CHA, Hyung-min, 101-1305, Daewon APT, Cheongju-si, Chungcheongbuk-do, 361-271 (KR); LEE, Gang-yeb, B-405, LGsawon Apt., Cheongju-si, Chungcheongbuk-do, 361-758 (KR); PARK, Kyong-won, Cheongju-si, Chungcheongbuk-do, 360-112 (KR)
(74) Representative: Hoffmann Eitle
(86) International application number: PCT/KR2006/000106
(87) International publication number: WO 2006/080781

(56) References cited:
- EP-A1- 1 739 147
- WO-A1-00/69985
- WO-A1-98/29231
- WO-A1-99/65999
- WO-A1-03/025078
- JP-A- 2004 250 568

## Description

### Technical Field

The present invention relates to an adhesive sheet for fixing a film to a target surface using an adhesive.

### Background Art

An adhesive sheet is applied to a variety of fields due to its easiness of use by which a film can be detachably attached to a target surface. Specific examples of the adhesive sheet include a reflective sheet, an advertisement film, a finishing film for construction, a label, a tape, and the like.

To produce such an adhesive sheet, a base sheet is first prepared by means of rolling or casting, an adhesive is coated on one surface of a release liner, and the coated surface of the release liner and one side of the base sheet are put together with each other.

The release liner is generally configured by coating paper with polyethylene, polypropylene, polyester or the like, and the coating is treated with silicone or otherwise to facilitate easy separation from the adhesive.

A release surface of the release liner is prepared to have good smoothness so that the adhesive can be coated to have a uniform thickness. A film having a smooth adhesive surface may cause inferior appearance due to a swelled surface of the film since air may be trapped between an adhesive and a target surface while the film is attached to the target surface. In addition, an adhesion area to the target surface is reduced due to a layer of the trapped air, resulting in decrease of an adhesive force.

In order to solve this problem, there has been made an attempt in which a non adhesive inorganic material, metallic component or glass is positioned on the surface of a successive adhesive layer to enable adjustment of the position of a sheet, to impart easiness of removal of air and to provide the surface of the adhesive layer with passages through which air can be discharged.

If a discrete adhesive layer is formed on a sheet, an adhesive-free portion of the sheet can serve as a channel through which air may be removed. Such a discrete adhesive layer is formed by arranging an adhesive in the form of islands on a film through printing or spraying, and drying the adhesive islands.

Alternatively, a texture on a silicon-treated surface of a release liner or film is modified so that the texture can be transferred to the surface of an adhesive layer, thereby forming channels for use in removing air.

European Laid-Open Patent Publication No. 279579 discloses a pressure sensitive adhesive sheet including a successive adhesive layer with an irregular adhesive surface. This successive adhesive layer with the irregular adhesive surface enables provision of both initial ability and lasting ability to relocate the sheet on a variety of target surfaces during construction.

Japanese Laid-Open Patent Publication No. 6-212131 discloses improvement of both easiness of removal of air and ability to relocate a sheet by imparting convexo-concave portions on the surface of a successive adhesive layer. In particular, the invention disclosed in the publication provides a re-peelable adhesive sheet for decoration, wherein each of the convexo-concave portions has a height of 10 to 20mm, a bottom width of 50 to 100mm, and a width of its upper flat surface of 50 to 100mm.

U.S. Patent No. 5650215 discloses a method for producing a product such as an adhesive tape or a transfer coat, which includes a successive pressure sensitive adhesive layer with a micro texture having a series of patterns of which the aspect ratio is about 0.1 to about 10. The micro texture should have microscopic dimensions in at least two of height, width and length, and the product such as an adhesive tape or a transfer coat with the micro texture can obtain initial ability to relocate the product.

In addition, U.S. Patent No. 6524675 limits the volume of air removal channels formed by a micro texture to at least 1 10³mm³ per circular area of an adhesive with a diameter of 500mm. Moreover, in order to meet the above condition, a pitch of patterns is limited to 400mm or less so that a convexo-concave configuration does not appear on a front surface of a sheet attached to a target surface.

U.S. Patent No. 6630218 discloses two processes of coating an adhesive on a flat release liner and putting the release liner together with a sheet so that a flat configuration is memorized in the adhesive; and removing the release liner and putting the sheet together with a release liner having a convexo-concave texture so as to give a convexo-concave texture to the surface of the adhesive. When the release liner is removed, the adhesive is restored to its flat configuration memorized therein due to elasticity of the cross-linked adhesive, whereby the convexo-concave texture disappears. Further, at least 92% of an adhesion area is obtained after 48 hours at 25°C so that the convexo-concave patterns existing in the adhesive cannot emerge on the surface of the sheet.

U.S. Patent No. 6197397 discloses formation of a micro-replicated adhesive surface having both micro-channels for fluid discharge and pegs for improved adhesive property. Such micro-embossed patterns have the micro-channels for fluid discharge and depressions in which a non-adhesive material may be placed, thereby facilitating removal of air and simultaneously improving ability to relocate a sheet.

JP 2004-250568 A discloses an adhesive sheet including an adhesive layer having a rough surface on a base sheet, wherein the adhesive layer has a plurality of grooves provided in a surface thereof, which have different depths of at least 2 or more levels. The plurality of these grooves extend in two directions resulting in a surface roughness of the adhesive layer.

### SUMMARY OF THE INVENTION

The present invention is to remove air trapped upon application of an adhesive sheet, to improve re-peelabilty and ability to relocate a sheet, and to improve an appearance and adhesive force after application thereof.

The present invention is intended to solve the aforementioned problems by connecting two types of channels: a first type of channels that can be easily vanished by pressure during application of a sheet, and a second type of channels that cannot be vanished for a certain period of time after application of the sheet.

It is an object of the present invention to provide an adhesive sheet, wherein air vent channels are formed to have various heights and widths so that the respective air vent channels can be vanished at certain time intervals, thereby facilitating removal of air and rapidly increasing an adhesion area to shorten time required for obtaining a designed adhesive force, and an adhesion area is increased to improve smoothness between an adhesive surface and a target surface so that patterns of the air vent channels cannot emerge on a front surface of the sheet.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a sectional view showing air vent channels of an adhesive layer according to the present invention;
Fig. 2 shows an adhesive surface of the adhesive layer having the air vent channels according to the present invention; and
Fig. 3 shows an adhesive surface of an adhesive layer having air vent channels according to another embodiment of the present invention.

### DESCRIPTION OF THE PREFERRED EMBODIMENT

The present invention provides an adhesive sheet as claimed in claim 1 in which channels with different depths are formed upon formation of convexo-concave portions in the surface of an adhesive to define air vent channels, so that some channels can be vanished under low pressure to increase an adhesion area and thus a designed level of adhesive force of the adhesive can be achieved within a short period of time. In addition, the convexo-concave surface enables discharge of air trapped between an adhesive surface and a target surface during application of the sheet, and the channels are vanished within a short period of time to increase the smoothness of the adhesive surface, thereby preventing the convexo-concave portions of the adhesive from emerging on the surface of the sheet.

In the present invention, a reverse texture corresponding to air vent channels is embossed in a release liner using a general embossing method. The release liner is made by coating paper with a thermoplastic resin such as polyethylene or polypropylene, so that it can be easily deformed by heat or pressure.

An embossing roll is heated to about a melting point of the resin coated on the release liner and imparts patterns to the release liner that passes through a nip portion between the embossing roll and a rubber roll. At this time, the temperature of the embossing roll is preferably 90 to 160 °C. If the temperature of the embossing roll is too low, desired patterns cannot be embossed due to lack of fluidity of the thermoplastic resin. On the contrary, if the temperature of the embossing roll is too high, the resin is excessively melted, so that desired patterns cannot be embossed.

The channels on the adhesive surface formed by embossing the release liner have different heights and widths and are connected with one another, so that air trapped upon application of the sheet can be discharged outside the sheet.

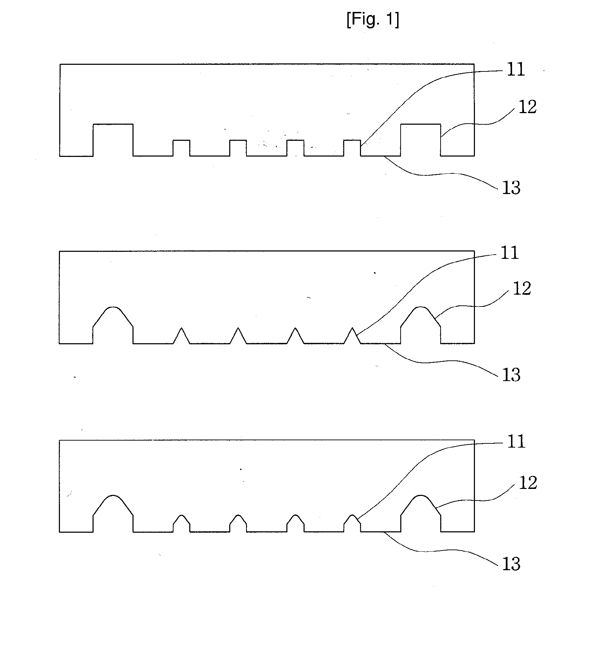

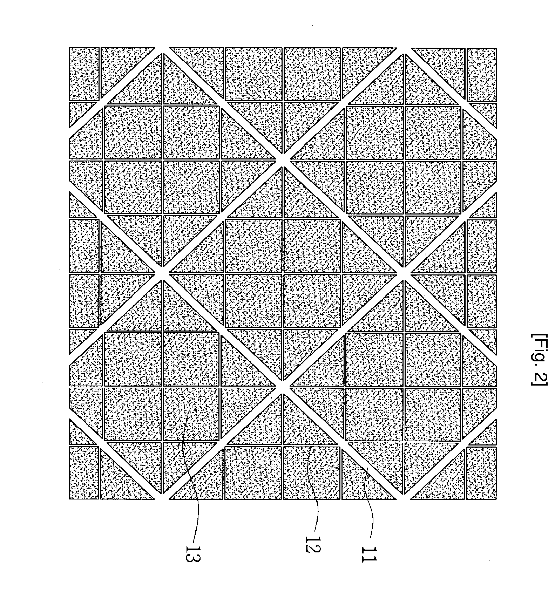

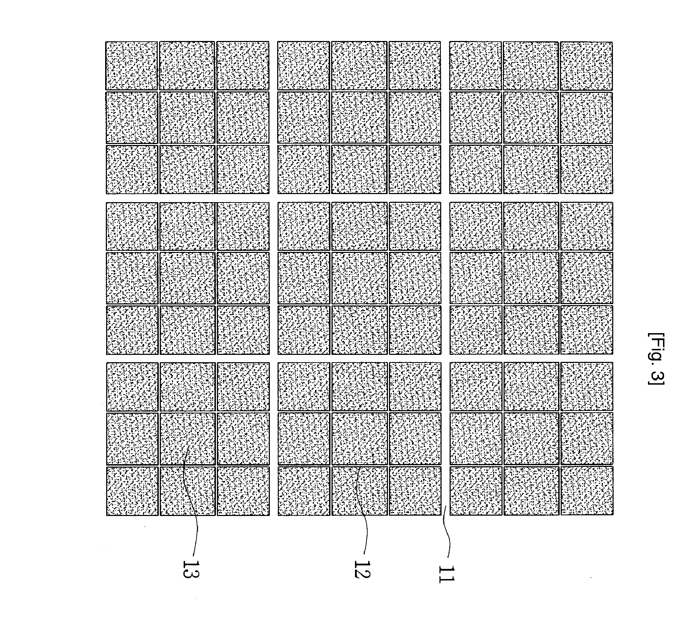

As for the heights of the channels, the air vent channels include low channels (L) 11 having a height of 3 to 10 µm and high channels (H) 12 having a height of 10 to 20 µm, as shown in Fig. 1. These channels are connected to one another, as shown in Figs. 2 and 3. If the height of an air vent channel is 10 µm or less, the channel is generally easily vanished, resulting in poor discharge of air. However, if the length of the channel is reduced to 4 mm or less, air discharge effects are obtained before the channel is vanished, and the channel is then easily vanished to increase a contact area with a target surface, which is expected to improve an adhesive force and to prevent a pattern from emerging on the surface of the sheet. At this time, in order to discharge air through the low channels (L) 11 outside the sheet, the low channels (L) 11 should be connected to the high channels (H) 12. Since the channels (H) 12 have a height larger than that of the low channels (L) 11, the high channels are not easily vanished and thus can discharge air collected through the low channels (L) 11 outside the sheet. Hereinafter, the low channels (L) 11 that are first vanished are called "first-stage channels," and the high channels (H) 12 are called "second-stage channels."

However, the first-stage channels have a height of at least 3 µm. This is because a variation in the thickness of the adhesive coated on the release liner is generally 1 to 2 µm and thus there is a need for securing the height of the channels larger than the variation, as well as the height of the channels less than 3µm causes the channels to be vanished immediately upon contact thereof with a target surface so that air vent effects cannot be expected even for a short period of time.

If the lengths of the first-stage channels are excessively shortened to have a pattern pitch of 2 mm or less, a contact area with a target surface is reduced to decrease an initial adhesive force, which may cause separation immediately when the sheet is attached to a curved portion. Thus, it is preferred that patterns configured by the first-stage and second-stage channels have a pitch of at least 2 mm.

To achieve effective discharge of air, the width of the channels should be considered in addition to the height of the channels. If the width of a channel is large, the channel may not be vanished even after the sheet has been attached to a target surface, thereby serving as an inflow passage of a fluid, and a contact area with the target surface is reduced to decrease an adhesive force. On the contrary, if the width of a channel is small, the channel may be clogged before air trapped upon application of the sheet is discharged. Thus, each of the first-stage channels (L) has a width of 10 to 30 µm and each of the second-stage channels (H) has a width of 30 to 60 µm.

The first-stage channels (L) are expected to obtain air discharge effects for a short period of time but have a degraded function of discharging air outside edges of the sheet. Thus, the first-stage channels are preferably formed to be connected to the second-stage channels (H) such that they have lengths of less than 4 mm. That is, the second-stage channels have a pattern pitch of 2 to 4 mm.

Each of the channels may have a cross section with a geometric figure such as a rectangle, a triangle, a pentagon and a U-shape, and the first-stage channels may have sectional shapes different from those of the second-stage channels. Even though the sectional shape of a channel is not a rectangle, its behavior is determined according to a bottom width and a largest height of the channel except a case where the sectional shape is exceptional. Thus, hereinafter, the term 'width' refers to a bottom width of a channel, and the term 'height' refers to a largest height of a channel.

Such patterns are formed on the surface of an adhesive by means of transfer. Specifically, a liquid adhesive is coated and dried on the surface of a release liner having embossed patterns. The adhesive preferably has a thickness of 20 to 50 µm after it has been dried. Thereafter, a base sheet is attached thereto by means of rolling or casting, thereby producing a finished product.

The present invention will be described in greater detail in connection with the following examples. spectively.

### Example

Embossment line patterns for forming channels with specification shown in Table 2 below were formed on a release surface of a release liner. An acrylic adhesive was coated and dried on the release liner, and a base sheet was put together with the release liner to form an adhesive sheet with a thickness of 30 to 35mm. The release liner was peeled off and the sheet was attached to an acrylic plate. After one day passed, the surface of the sheet was smooth. When 20 minutes passed after the attachment, the adhesive force was lower than that in Comparative Example 1. However, when 24 hours passed after the attachment, the adhesive force was similar to that in Comparative Example 1.

### Comparative Example 1

An adhesive sheet was prepared in the substantially same manner as the example, except that a release liner in which an air removal channel is not formed on a release surface thereof. As seen from Table 2 below, an adhesive force was highest but an appearance after the attachment was worst due to trapped air.

### Comparative Example 2

Only one kind of channels having the same height and width was formed on a release surface of a release liner, and an adhesive sheet was formed using the release liner in the same manner as the example. The detailed specification of the channels is shown in Table 2. In Comparative Example 2, it was possible to more easily prevent air from being trapped as compared with Comparative Example 1, but convexo-concave patterns of the adhesive emerged on an outer surface of the sheet. An adhesive force was lower than that in Comparative Example 1 by about 20% regardless of time passed after the attachment.

### Comparative Example 3

Even in this comparative example, one kind of channels was formed according to the specification shown in Table 2, and an adhesive sheet was formed in the same manner as the example. There was no reduction in an adhesive force, but air was trapped upon attachment of the sheet to an acrylic plate.

### Comparative Example 3-1

In this comparative example, an adhesive sheet was formed in the same manner as Comparative Example 3, except that a pattern pitch was increased as shown in Table 2. An adhesive force was good, but air removal was extremely deteriorated.

### Comparative Example 4

In this comparative example, one kind of channels was formed as shown in Table 2. The width of the channels was increased, and an adhesive sheet was formed in the same manner as the example. An adhesive force was remarkably deteriorated, and a film surface state was poor.

### Comparative Example 4-1

In this comparative example, an adhesive sheet was formed in the same manner as Comparative Example 4 except that the height of the channels was increased as shown in Table 2. An adhesive force was remarkably deteriorated, and a film surface state was extremely poor.

### Comparative Example 5

In this comparative example, low channels (L) and high channels (H) were formed as shown in Table 2. The channels had a relatively larger width over the example. Deterioration of an adhesive force was found due to decrease in an initial adhesion area, and a surface film state was found to be slightly poor.

### Comparative Example 6

Even in this comparative example, low channels (L) and high channels (H) were formed as shown in Table 2. The channels had a relatively larger height over the example. There was a little deterioration of an adhesive force, but a film surface state was found to be very poor.

**Table 2**

| | | Specification of Channel | | | Evaluation of Adhesive Force and Appearance | | | |
|---|---|---|---|---|---|---|---|---|
| | | Channel (mm) | | Pattern pitch (mm) | Adhesive force (kg/in) | | Evaluation of appearance | |
| | | Height | Width | | 20 min. after attachment | 24 hrs. after attachment | Air removal | Film surface state |
| Example | Channel L | 9 | 20 | 3 | 0.8 | 1.6 | Good | Good |
| | Channel H | 16 | 40 | | | | | |
| Comparative Example 1 | | - | - | - | 1.0 | 1.7 | Poor | Good |
| Comparative Example 2 | | 30 | 40 | 1 | 0.7 | 1.3 | Good | Poor |
| Comparative Example 3 | | 10 | 40 | 1 | 1.0 | 1.6 | Fair | Good |
| Comparative Example 3-1 | | 10 | 40 | 6 | 1.0 | 1.8 | Poor | Good |
| Comparative Example 4 | | 15 | 200 | 1 | 0.5 | 1.5 | Good | Fair |
| Comparative Example 4-1 | | 30 | 200 | 1 | 0.4 | 1.0 | Good | Poor |
| Comparative Example 5 | Channel L | 5 | 50 | 3 | 0.6 | 1.4 | Good | Fair |
| | Channel H | 15 | 50 | | | | | |
| Comparative Example 6 | Channel L | 15 | 20 | 3 | 0.7 | 1.5 | Good | Poor |
| | Channel H | 30 | 40 | | | | | |

It was found from these comparative examples shown in Table 2 and other subsidiary experiments that air cannot be effectively discharged but an adhesive force was maintained when the height of channels is not greater than 10mm. In addition, in order to prevent patterns caused by convexo-concave portions on an adhesive surface from being recognized with the naked eye on a front surface of a sheet after the sheet is attached, the height of the channels is preferably not greater than 20mm.

In the example, two kinds of channels were formed on the basis of the above observation results. When a pattern pitch is 2 to 4mm, there is disadvantage in that an adhesive force is low for a short period of time, but there is an advantage in that the adhesive force is recovered after 24 hours to a level similar to that in Comparative Example 1, and it was also found that the appearance of the sheet was improved.

### Industrial Applicability

According to the present invention, first-stage channels having a smaller height and second-stage channels having a larger height are formed to be connected to one another, so that the first-stage channels can serve as air vent channels with a shorter length for a short period of time and then be vanished to give a wider contact area, while the second-stage channels can serve as air vent channels for a long period of time, resulting in improvement of application of an adhesive sheet, and prevention of emergence of patterns on a front surface of the sheet from the channels to improve an appearance.

## Claims

1. An adhesive sheet having multi-staged air vent channels, the adhesive sheet including a base film and a pressure sensitive adhesive layer,
wherein the adhesive layer has surface patterns formed by transfer of convexo-concave portions on a release surface of a release liner, the surface patterns being constructed of at least two kinds of channels connected with each other, the at least two kinds of channels including first-stage channels with a relatively smaller height and second-stage channels with a relatively larger height, and the first-stage channels are arranged at a smaller interval and the second-stage channels are arranged at a larger interval,
wherein the first-stage channels have a height of 3 µm to 10 µm and a width of 10 µm to 30 µm, and the second-stage channels have a height of 10 µm to 20 µm and a width of 30 µm to 60 µm, and
wherein the second-stage channels are arranged at an interval of 2 mm to 4 mm and the lengths of air vent paths of the first-stage channels are limited to the dimensional range,
so that the first-stage channels provides air vent channels before they are vanished after the adhesive sheet is attached to a target surface so that an adhesion area to the target surface can increase as the first-stage channels are vanished, and the second-stage channels provide air vent channels even after the first-stage channels are vanished.

## Patentansprüche

1. Klebefolie mit mehrstufigen Lüftungskanälen, wobei die Klebefolie eine Basisfolie und eine Haftklebstoffschicht umfasst,
wobei die Klebstoffschicht Oberflächenmuster hat, die durch Übertragung von konvex-konkaven Abschnitten auf einer Trennoberfläche einer Trennschicht gebildet sind, wobei die Oberflächenmuster aus zumindest zwei Arten von miteinander verbundenen Kanälen gebildet sind, und diese zumindest zwei Arten von Kanälen, Kanäle der ersten Stufe mit einer relativ geringeren Höhe und Kanäle der zweiten Stufe mit einer relativ größeren Höhe umfassen, und die Kanäle der ersten Stufe in einem geringeren Abstand angeordnet sind, und die Kanäle der zweiten Stufe in einem größeren Abstand angeordnet sind,
wobei die Kanäle der ersten Stufe eine Höhe von 3 µm bis 10 µm und eine Breite von 10 µm bis 30 µm haben, und die Kanäle der zweiten Stufe eine Höhe von 10 µm bis 20 µm und eine Breite von 30 µm bis 60 µm haben, und
wobei die Kanäle der zweiten Stufe mit einem Abstand von 2 mm bis 4 mm angeordnet sind und die Längen der Lüftungswege der Kanäle der ersten Stufe auf den Abmessungsbereich begrenzt sind,
so dass die Kanäle der ersten Stufe Lüftungskanäle bereitstellen, bevor sie sich auflösen, nachdem die Klebefolie an einer Zieloberfläche befestigt wurde, so dass eine Klebefläche an der Zieloberfläche sich vergrößern kann, wenn sich die Kanäle der ersten Stufe auflösen, und die Kanäle der zweiten Stufe Lüftungskanäle auch dann bereitstellen, nachdem sich die Kanäle der ersten Stufe aufgelöst haben.

## Revendications

1. Feuille adhésive ayant des canaux d'évacuation d'air sur plusieurs niveaux, la feuille adhésive comportant un film de base et une couche adhésive sensible à la pression,
dans laquelle la couche adhésive a des motifs de surface formés par transfert de parties convexo-concaves sur une surface anti-adhésive d'une doublure anti-adhésive, les motifs de surface étant construits d'au moins deux types de canaux reliés les uns aux autres, l'au moins deux types de canaux comportant des canaux de premier niveau avec une hauteur relativement plus petite et des canaux de deuxième niveau avec une hauteur relativement plus grande, et les canaux de premier niveau sont agencés à un intervalle plus petit et les canaux de deuxième niveau sont agencés à un intervalle plus grand,
dans laquelle les canaux de premier niveau ont une hauteur allant de 3 µm à 10 µm et une largeur allant de 10 µm à 30 µm, et les canaux de deuxième niveau ont une hauteur allant de 10 µm à 20 µm et une largeur allant de 30 µm à 60 µm, et
dans laquelle les canaux de deuxième niveau sont agencés à un intervalle allant de 2 mm à 4 mm et les longueurs des chemins d'évacuation d'air des canaux de premier niveau sont limitées à la plage dimensionnelle,
de sorte que les canaux de premier niveau constituent des canaux d'évacuation d'air avant qu'ils ne disparaissent après que la feuille adhésive est fixée à une surface cible de sorte qu'une zone d'adhérence à la surface cible puisse augmenter à mesure que les canaux de premier niveau disparaissent, et les canaux de deuxième niveau constituent des canaux d'évacuation d'air même après que les canaux de premier niveau disparaissent.
